# EUROPEAN PATENT SPECIFICATION

(11) **EP 0 695 894 B1**
(45) Date of publication and mention of the grant of the patent: **20.05.1998**
(21) Application number: 95909956.5
(22) Date of filing: 22.02.1995
(51) Int. Cl.: F16J 9/16, F16J 9/20, F16J 9/14

(54) **COMPRESSION RING FOR AN INTERNAL COMBUSTION ENGINE**
KOMPRESSIONSRING FÜR BRENNKRAFTMOTOR
SEGMENT D'ETANCHEITE POUR UN MOTEUR A COMBUSTION INTERNE

(30) Priority: 24.02.1994 JP 49948/94
(43) Date of publication of application: 07.02.1996
(73) Proprietor: KABUSHIKI KAISHA RIKEN, Chiyoda-ku Tokyo 102 (JP)
(72) Inventor: WADA, Yoshiaki Kabushiki Kaisha Riken, Kashiwazaki-shi Niigata-Ken 945 (JP)
(74) Representative: Winter, Konrad Theodor, Dipl.-Ing.
(86) International application number: JP9500255
(87) International publication number: WO9523304

(56) References cited:
- JP-A- 4 362 370
- JP-A-58 122 137
- JP-B-47 019 651
- JP-U- 2 058 164
- JP-Y- 5 006 452
- US-A- 1 414 747

## Description

### Technical Field

The present invention relates to a compression ring for internal-combustion engines.

### Background Art

With regard to compression rings which are used as one type of piston rings for internal-combustion engines, various improvements have been made for increasing a sealability thereof in order to prevent a leakage of blow-by gas when the piston having the compression rings is subjected to a pressure of a combustion gas.

A compression ring according to the preamble of claim 1, is disclosed in US 5253878 and illustrated in Fig. 3. In this example, a compression ring (1) has a first butt end face having a rib (2) which circumferentially extends from an upper outer circumferential side thereof and is a right-angled triangle in cross-section, and another butt end surface having a notch (3) which is formed in an upper outer circumferential side thereof and a right angled triangle in cross-section to receive the rib (2). This compression ring (1) is mounted in the ring groove (4) of a piston (5) and in the state wherein the piston is reciprocally fitted into a cylinder bore the rib (2) is put upon the notch (3) to meet each butt end surfaces.

To cope with a high output power and high capacity for a recent gasoline engine,the tough piston rings are provided and a selection of metal materials suitable to the requisite mechanical processing of the piston rings is desired. In other word, according to a combination of a high strength material and an excellent mechanical processing material the materials of the piston ring are selected. Since the quality of the material for the piston itself into which the piston rings are snugly fitted becomes lower with respect to that of the piston rings, a wear of a side surface of the ring groove will become greater, so that unstable motion of the piston ring in the ring groove occurs. As a result, the rib (2) of the piston ring (1) which has so called double-angle type of butt end construction is broken and an engine capacity or performance is considerally decreased. This break of the rib (2) often happens in the case that the upper corner portion on the inner circumferential side of the compression ring is circumferentially cut away to form so called inner cut (7) and the rib (2) has a small cross-sectional dimensions.

It is principally known to have annular grooves on the inner peripheral surface of a piston ring. However, these grooves have a different arrangement and function:

Document JP-A-58-122137 discloses a piston ring having one or a plurality of groove-stripes for sludge accumulation grooves positioned along the inner surface symmetrically with respect to a centerline thereof.

From document JP-U-2-58164 a packing for reciprocation is known. It is composed of a nearly circular ring-shaped elastic body which is formed on the inner circumferential surface with unevenness in an axial direction.

According to document JP-Y-5-6452 a seal ring received in an annular groove of a piston, shows in an inner circumferential surface thereof an annular groove. This groove engages with an annular projection corresponding in shape substantially to the annular groove of the seal ring and provided in the annular groove of the piston.

### Disclosure of Invention

To solve the above-mentioned problems encountered in a prior art an object of the present invention is to provide a compression ring for internal-combustion engines having a circumferentially extending rib with an increased cross-sectional dimension while a side surface sealability of the compression ring is maintained by developing another measure which has the same function with so called inner cut type ring which increases the side surface sealability (refer to the specification of GB 2164418A) of the compression ring.

According to the present invention, the foregoing objects are attained by providing a compression ring for an internal combustion engine, comprising a rib circumferentially projecting from an outer upper circumferential side portion which forms a part of one of opposed butt end faces, a notch formed in the outer upper circumferential side portion which forms a part of another butt end face to put the rib thereupon, characterized in that the compression ring further comprises at least one annular groove circumferentially extending along an inner peripheral surface and a center line of each annular groove is positioned above a center line of width of the compression ring, wherein the inner upper circumferential corner portion of the compression ring is free of groove.

Preferablly, a plurality of the annular grooves are formed and each groove has a cross-section in the shape of a semicircle.

According to the present invention, since the inner circumferential portion of the rib is brought to an area near the inner peripheral surface of the ring and the cross-sectional dimensions of the rib becomes larger, the break of the rib is prevented. The compression ring with the annular groove is easy to warp the outer periphery thereof in the form of a disk to maintain the side surface sealability of the compression ring.

### Brief Description of Drawings

The invention will be further described, by way of example, with reference to the accompanying drawings, in which:
Fig. 1 is a sectional view illustrating the construction of butt end portions and an annular groove in an embodiment of the present invention;
Fig. 2 is a sectional view the construction in the vicinity of butt end faces in another embodiment of the present invention;

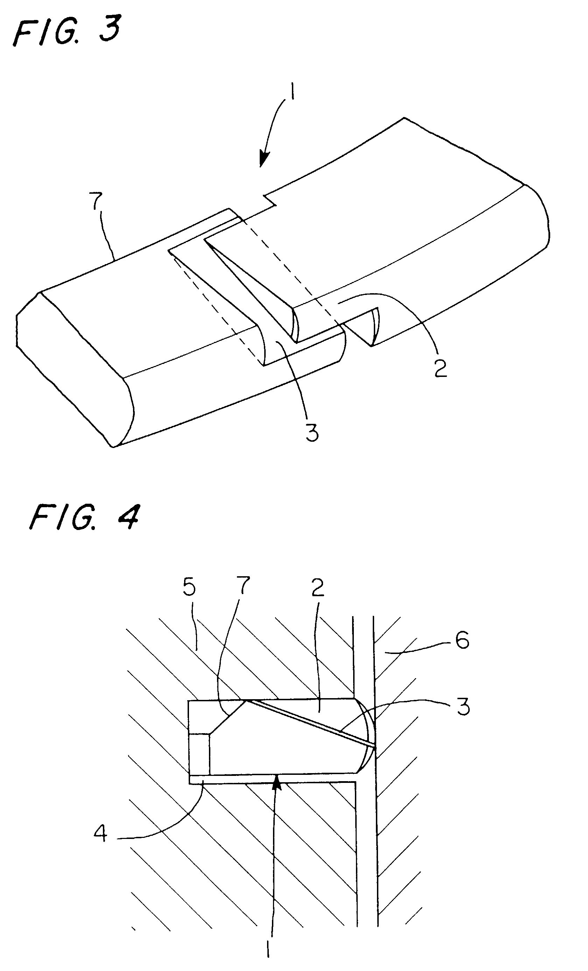

Fig. 3 is a perspective view illustrating the construction in the vicinity of butt end faces according to a prior art; and
Fig. 4 is a sectional view showing a part of an engine equipped with a piston ring according to a prior art.

### Best Mode for Carrying Out the Invention

Embodiments of the present invention will now be described with reference to the accompanying drawings.

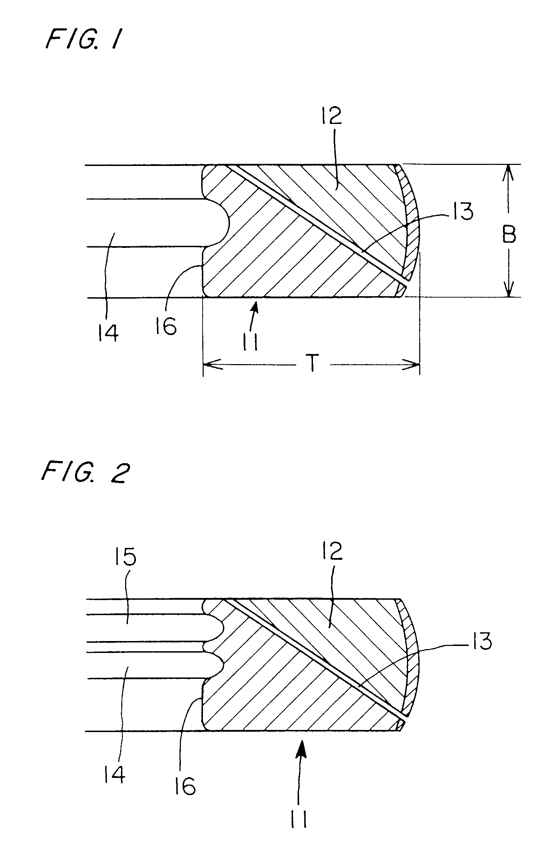

Fig. 1 is an view illustrating the construction in the vicinity of butt end faces of a compression ring (11) according to a first embodiment of the present invention. The construction of the butt end faces or portions is so called double-angle construction, which has a rib (12) circumferentially projecting from an outer upper circumferential side portion of one of the opposed butt end faces and having a cross-section in the shape of a right-angled triangle, and a notch (13) formed in the outer upper circumferential side portion which forms a part of another butt end face to be capable of putting the rib (12) thereupon. In the state that the compression ring (11) is fitted into the ring groove formed on a reciprocal piston and the piston equipped with the compression ring is inserted into a cylinder bore, the rib (12) is faced with the notch (13).

An inner peripheral surface (16) of the compression ring (11) is provided with an annular groove (14) which has a cross-section in the shape of semicircle and extends circumferentially. A center line of the annular groove (14) is positioned somewhat above a center line of a width of the compression ring (11) and the annular groove (14) assists in warping the compression ring (11) to maintain substantially the same side surface sealability as that of so called inner cut type piston ring.

The compression ring (11) is not provided with the inner cut on the inner upper circumferential side portion. Consequently, the inner circumferential edges of the rib (12) and the notch (13) can extend near the inner upper circumferential corner portion, respectively, so that the cross-sectional dimensions of the rib (12) become greater.

The following example is submitted to prove the advantage of the embodiment according to the present invention. A compression ring for a cylinder dimension of 76φ has a thickness (T) of 3.3mm and a width (B) of 1.5mm. In the case of the annular groove formed on the inner peripheral surface and having a depth of 0.5mm and a height of 0.5mm, the cross-sectional area of the rib will be 1.65mm² (Area = thickness or height (3.0mm) x width (1.1mm) x 1/2). In the case of a prior compression ring having the same size as that of the compression ring according to the above-mentioned example, if the inner cut of a triangle in section having dimensions of thickness or height (0.5mm) and width (0.5mm) and formed on the inner upper circumferential corner portion is provided, the cross-sectional area of the rib according to the prior art is 1.43mm² (thickness or height (2.6mm) x width (1.1mm) x 1/2) which is less than the area of the embodiment in accordance with the present invention. Namely, an increase of 15% in cross-sectional area of the rib will be expected in this invention.

Another embodiment illustrated in Fig. 2 has a pair of annular grooves (14, 15) which are spaced away each other and formed circumferentially on the inner peripheral surface (16) of the compression ring (11). The center line of the lower groove (14) is positioned somewhat above the center line of the width of the compression ring (11). The other construction in the embodiment of Fig. 2 is the same as that of Fig. 1.

When the blank material for the compression ring (11) is drawn as a wire material through a metal die having groove corresponding portion, the grooves (14, 15) are formed on a plane of the wire material corresponding to the inner peripheral surface of the compression ring (11).

A test was performed using the compression rings (the rings of 100 pieces according to the present invention and the prior rings of 100 pieces) for the cylinder dimensions of 76φ (each sizes of ring are measured as mentioned above) and at 2400rpm with a full engine load (4/4) for continuous engine operation of two hundred hours. The experimental results in terms of break of rings and oil consumption are as follows. The ribs of the compression rings which each have an annular groove formed on the inner peripheral surface thereof are not broken and the ribs of the several conventional compression rings are broken so that engine efficiency is considerably decreased. As the results of comparison of oil consumption, it is said that both the compression rings, namely, the rings each having the annular groove according to this invention and the prior rings each having the inner cut, show the substantially same level of oil consumption because the side surface sealability of both the compression rings is the same when their ribs are not broken.

### Industrial Applicability

According to the present invention, the large cross-sectional area of the rib formed on one of the opposed butt end faces can be obtained and a side surface sealability thereof can be maintained as well as the ring having the inner cut.

## Claims

1. A compression ring (11) for an internal combustion engine comprising a rib (12) circumferentially projecting from an outer upper circumferential side portion which forms a part of one of opposed butt end faces, a notch (13) formed in the outer upper circumferential side portion which forms a part of another butt end face to put the rib (12) thereupon, characterized in that the compression ring (11) further comprises at least one annular groove (14) circumferentially extending along an inner peripheral surface (16) and a center line of each annular groove is positioned above a center line of width of the compression ring (11), wherein the inner upper circumferential corner portion of the compression ring (11) is free of groove.

2. A compression ring according to claim 1, wherein a plurality of annular grooves (14, 15) are formed on the inner peripheral surface (16) of the compression ring.

3. A compression ring according to claim 2, wherein each annular groove (14, 15) has a cross-section in the shape of a semicircle.

## Patentansprüche

1. Kompressionsring (11) für eine Brennkraftmaschine mit innerer Verbrennung, mit einer Rippe (12), die von einem oberen Außenumfangsseitenabschnitt, der einen Teil einer Stoßfläche gegenüberliegender Stoßflächen bildet, aus in Umfangsrichtung ragt, und einer Kerbe (13), die an einem oberen Außenumfangsseitenabschnitt, der einen Teil der anderen Stoßfläche bildet, zur Auflage der Rippe ausgebildet ist, gekennzeichnet durch des weiteren wenigstens eine sich an einer Innenumfangsfläche (16) in Umfangsrichtung erstreckenden Ringnut (14), deren Mittellinie oberhalb einer Mittellinie in Breitenrichtung des Kompressionsrings (11) angeordnet ist, wobei der obere Innenumfangseckabschnitt des Kompressionsrings (11) nutfrei ist.

2. Kompressionsring nach Anspruch 1, wobei an der Innenumfangsfläche (16) des Kompressionsrings eine Vielzahl von Ringnuten (14, 15) ausgebildet sind.

3. Kompressionsring nach Anspruch 2, wobei jede Ringnut (14, 15) einen Querschnitt in Form eines Halbkreises besitzt.

## Revendications

1. Un segment d'étanchéité (11) pour un moteur à combustion interne comprenant une nervure (2) dépassant de manière circonférentielle d'une portion de côté circonférentielle supérieure extérieure qui forme une partie d'une des faces de gros bout opposées, une entaille (13) formée dans la portion de côté circonférentielle supérieure extérieure qui forme une partie d'une autre face de gros bout pour mettre la nervure (12) là-dessus, caractérisé en ce que le segment d'étanchéité (11) comprend de plus au moins une rainure en forme d'anneau (14) s'étendant de manière circonférentielle le long d'une surface intérieure périphérique (16) et une ligne centrale de chaque rainure en forme d'anneau est positionnée au-dessus d'une ligne centrale de largeur du segment d'étanchéité (11), dans lequel la portion de coin circonférentielle supérieure intérieure du segment d'étanchéité (11) n'a pas de rainure.

2. Un segment d'étanchéité selon la revendication 1, dans lequel une pluralité de rainures en forme d'anneau (14, 15) sont formées sur la surface périphérique intérieure (16) du segment d'étanchéité.

3. Un segment d'étanchéité selon la revendication 2, dans lequel chaque rainure en forme d'anneau (14, 15) a une section transversale en plein-cintre.
